# EUROPEAN PATENT APPLICATION

(11) **EP 2 458 850 A1**
(43) Date of publication of application: **30.05.2012**
(21) Application number: 11171356.6
(22) Date of filing: 24.06.2011
(51) Int. Cl.: H04N 5/445

(54) **Program presentation apparatus and method**

(30) Priority: 26.11.2010 JP 2010263982
(71) Applicant: Kabushiki Kaisha Toshiba, Tokyo 105-8001 (JP)
(72) Inventor: Osaki, Tsugutoyo, Minato-ku 105-8001 (JP); Takayama, Yoshifumi, Minato-ku 105-8001 (JP)
(74) Representative: Henkel, Breuer & Partner

(57) **Abstract**

According to one embodiment, a recorded program storage (102) automatically records a plurality of programs which are received by receivers (T1-Tn). A program extraction data storage (121) stores program extraction data generated based on presentation program data downloaded from a server (130). A program extractor (122) extracts a program to be viewed from the recorded program storage (102), based on the program extraction data, and outputs the program to a display (125).

## Description

Embodiments described herein relate generally to a program presentation apparatus and method.

Terrestrial digital broadcasting has commenced, and many programs can be simultaneously broadcast. A user is required to search a program list including many programs and find a desired program, when selecting a program to view by operating a television receiver, or when recording a program by operating a recording/reproduction unit.

To lighten the user's load, a recording/reproduction unit able to present a recommended program is developed. The recording/reproduction unit can display a list of recommended programs on a display. The user can program to record a desired program by the list.

A system for automatically recording a number of programs is also developed in a server. With this system, a server automatically records and stores many programs. The server can deliver a program to a user terminal through Internet or leased line as required.

A general architecture that implements the various features of the embodiments will now be described with reference to the drawings. The drawings and the associated descriptions are provided to illustrate the embodiments and not to limit the scope of the invention.
FIG. 1 is a diagram showing an exemplary configuration of an apparatus according to an embodiment;
FIG. 2 is a flowchart of exemplary operations of the apparatus according to the embodiment shown in FIG. 1 ; and
FIG. 3 is a detailed flowchart of a part of the flowchart shown in FIG. 2.

Various embodiments will be described hereinafter with reference to the accompanying drawings.

In general, according to one embodiment, there is provided a program presentation apparatus and method, which are configured to easily determine a program meeting the preferences of a user, and immediately read and reproduce the program from a recording medium storing many recorded programs.

According to the embodiment, a recorded program storage automatically records a plurality of programs. An program extraction data storage stores program extraction data generated based on presentation program data downloaded from a server. A program extractor extracts a program to be viewed from the recorded program storage, based on the program extraction data, and outputs the program to a display.

Hereinafter, embodiments will be explained with reference to the accompanying drawings. According to an embodiment, a recorded program storage 102 stores a plurality of programs. A program extraction data storage 121 stores program extraction data generated based on the program data supplied from a server 130. A program extractor 122 extracts a program to be viewed from the recorded program storage 102, and outputs the program to a display 125.

The program extraction data storage 121 compares the program identification data included in the program data supplied from a server, with the program identification data stored in the recorded program storage 102, and when they are identical, selects the supplied program data, and saves it as program extraction data. The program extraction data used to extract a program to be viewed may be selected from the program extraction data by operating a remote controller 150.

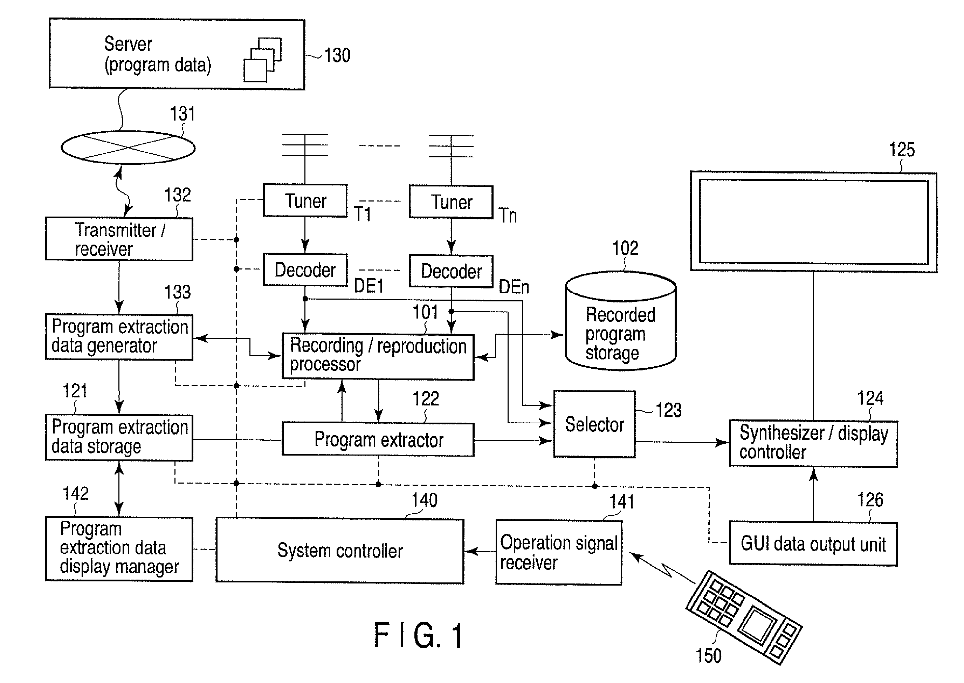

Details will be explained hereinafter. As shown in FIG. 1, a television set according to the embodiment has a receiving channel including a plurality of tuners T1 to Tn, as a receiver, and can simultaneously receive programs of a plurality of channels transmitted as terrestrial digital broadcasting. The received programs are decoded by decoders DE1 to DEn.

The decoded programs are encoded to signals for recording by a recording/reproduction processor 101, and stored in the recorded program storage (e.g., a hard disk drive) 102.

A desired one of the decoded programs can be selected by a selector 123, and supplied to the display 125 through a synthesizer/display controller 124.

The synthesizer/display controller 124 combines a moving picture for viewing, for example, with a video as a graphical user interface (GUI) such as a character, menu, and operation panel from a system controller 140. The synthesizer/display controller 124 can change a display size, control scrolling, and change a page according to operation signals from the remote controller 150.

The operation signals from the remote controller 150 are received by an operation signal receiver 141, and analyzed by a system controller 140. The system controller 140 reflects the content of an operation signal as an operation of a television receiver.

When a presentation program is extracted from the programs stored in the recorded program storage 102, the following operations are executed.

The user operates the remote controller 150 for displaying a menu (e.g., presses a menu button). Next, the user selects a recommended program selector button, and presses a set button on a menu screen. Then, a program reference table for program selection is displayed on the display 125.

In other words, the program extraction data storage 121 stores program extraction data for extracting a presentation program. When the user selects the recommended program selector button, and presses the set button on the menu screen, the system controller 140 operates, and a program reference table including identification data of two or more programs is displayed as a program list for example on the display 125 through a GUI data output module 126 and synthesizer/display controller 124.

Next, the user operates the remote controller 150 while monitoring the program list, and selects a desired program (e.g., a program name) by moving a cursor on the screen. When the set button of the remote controller 150 is pressed, the program extraction data of the program highlighted by the cursor is read from the program extraction data storage 121 to the program extractor 122. Then, the program extractor 122 controls the recarding/reproduction processor 101 to reproduce the program selected by the program extraction data from the programs stored in the recorded program storage 102. The reproduced program is input to the display 125 as a program to be viewed through the selector 123 and synthesizer/display controller 124.

The program extraction data generator 133 generates the program reference table for program selection by the program extraction data storage 121. The program extraction data generator 133 can download externally provided program data (e.g., data equivalent to a maximum of 100 programs) stored in the server 130 through a network 131, and a transmitter/receiver 132.

The program extraction data generator 133 checks whether the recorded program storage 102 includes the same program identification data as the program name (program identification data) for example included in the presentation program data. When the program identification data included in the presentation program data is identical to the program identification data stored in the recorded program storage 102, the program extraction data generator 133 generates presentation program data for a program corresponding to the program identification data (including the program identification data) as program extraction data, and inputs the data to the program extraction data storage 121.

Therefore, when a program to be viewed is selected from the programs stored in the recorded program storage 102, and reproduced, the program extractor 122 supplies the program extraction data to the recording/reproduction processor 101. The recording/reproduction processor 101 reads the program corresponding to the program identification data included in the program extraction data, and reproduces the program.

The system controller 140 can access a program extraction data manager 142, which refers to the program extraction data storage 121 storing the program data extracted by the program extractor 122. For example, the system controller 140 may be configured to execute sorting so that the program extraction data storage 121 can store program data with a recommendation mark, for example. However, the program extraction data manager 142 stores other program data including the program data with a recommendation mark. Because, even if a program is not recommended, the user may want to view such a program. In such a case, the user can change and display various program reference tables as a program reference table.

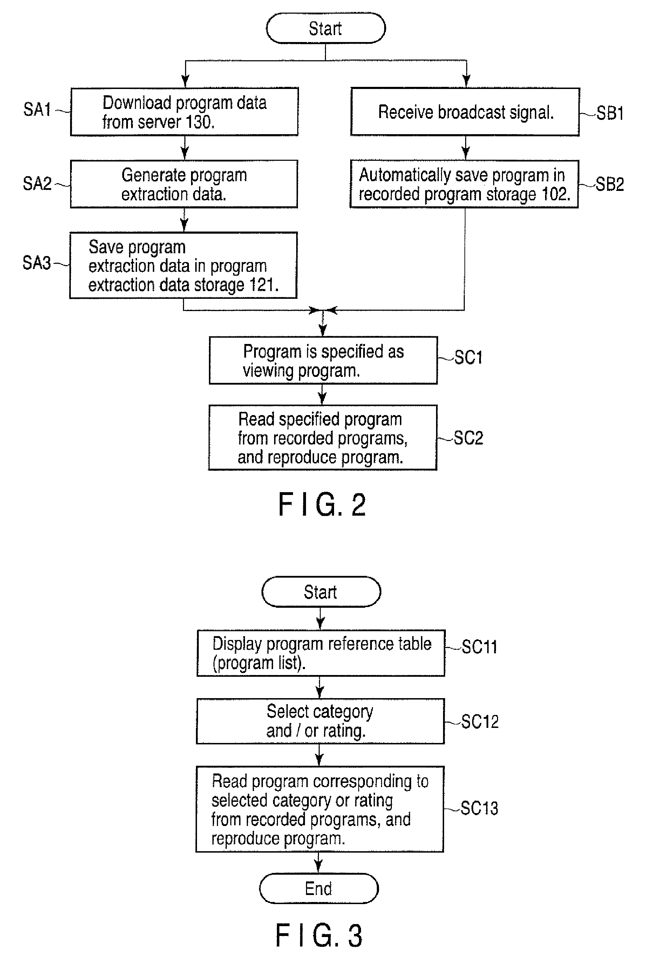

FIG. 2 is a flowchart of exemplary operations of the above-described television set according to the embodiment shown in FIG. 1. In step (block) SA1, presentation program data is obtained from the server 130. In step SA2, program extraction data is generated. In step SA3, program extraction data is stored in the program extraction data storage 121.

In a broadcast signal receiving channel, a broadcast signal is received (step SB1). In step SB2, the received program is automatically stored in the recorded program storage 102.

If a certain program is specified as a program to be viewed in step SC1, the specified program is read from the recorded programs, and reproduced, in step SC2.

In the above description, when selecting a program to be viewed, the user operates the remote controller 150, and selects a desired program (e.g., a program name) by moving a cursor on a program list on the screen. The selection method is not limited to this. A category or rating may be selected.

FIG. 3 is a detailed flowchart of step SC1 of the flowchart shown in FIG. 2. In other words, when the recommended program selector button is selected, and the set button is pressed, category and rating are displayed in addition to a program list, in step SC11, as shown in FIG. 3. Next, the user selects a category and/or rating, in step SC12. Then, in step SC13, a program corresponding to the selected category and/or rating is selected from the recorded programs stored in the recorded program storage 102, is reproduced. In other words, the program extraction data includes a category and/or rating displayable with a program name. When the displayed category and/or rating is selected and determined by an operation signal, the program extractor 122 can extract a program corresponding to the category and/or rating as a program to be viewed.

The above embodiment is not restrictive. In the above description, program extraction data is generated in a receiver. The program data (program identification data, and program names) stored in the recorded program storage 102 may be sent to the server 130, and program extraction data for a user may be generated in the server 130.

Presentation program data in the server 130 will be explained. The presentation program data is generated based on the program data (program identification data) sent from a plurality of users, for example. Software to generate presentation program data is created by a manager of the server 130. By using various criteria for evaluation, programs may be listed according to audience rating. Programs may also be classified by category such as sports, drama, education, and music, and listed according to audience rating. As recommended programs, programs may be grouped or rated according to popularity.

In the server 130, presentation program data can be collected in various forms. For example, source data of presentation program data may be collected from many users, vendors, and program providers. A user's television receiver may have a function to upload presentation program data. For example, the system controller 140 in a television receiver may rate a program viewed repeatedly by the user, or a program viewed from the first to the end, and may send a highly rated program to the server 130. Conversely, when a certain program A is started, but immediately stopped, and switched to another program B, and program B is viewed for a long time, the system controller 140 may have a function of rating program A to be lower than program B, and may send it to the server.

The program extraction data generator 133, program extraction data storage 121, and program extractor 122 are separated from the system controller 140. These units may be realized by software processing in the system controller 140.

In the above description, the program presentation apparatus has been explained as a television receiver to receive terrestrial digital broadcasting. The apparatus may of course be an apparatus to receive DBS, DTH, and cable television. The server 130 may be a set-top box, and the network 131 may be a LAN for home use. The embodiment is of course applicable to a recording/reproduction unit to reproduce a DVD and Blu-ray disc (registered trademark).

## Claims

1. A program presentation apparatus **characterized by** comprising:
a recorded program storage (102) configured to automatically record a plurality of programs received by a receiver;
a program extraction data storage (121) configured to store program extraction data generated based on presentation program data downloaded from a server (130); and
a program extractor (122) configured to extract a program to be viewed from the recorded program storage (102), based on the program extraction data, and outputs the program to a display.

2. The program presentation apparatus of claim 1, **characterized by** further comprising a program extraction data generator (133) which compares program identification data included in the presentation program data, with program identification data stored in the recorded program storage, and when they are identical, determines the program identification data to be the program extraction data, for generating the program extraction data.

3. The program presentation apparatus of claim 2, **characterized in that** the program extraction data includes displayable program identification data, and the program extractor (122) uses the program extraction data for extracting the program to be viewed, when the displayed program identification data is selected and determined by an operation signal.

4. The program presentation apparatus of claim 2, **characterized in that** the program extraction data includes a category and/or rating displayable with program identification data, and the program extractor extracts a program corresponding to the category and/or rating as a program to be viewed, when the displayed category and/or rating is selected and determined by an operation signal.

5. A program presentation method, in which a plurality of programs received by a receiver is automatically recorded in a recorded program storage, and the automatically recorded programs are desirably reproduced by a recording/reproduction processor, **characterized by** comprising:
storing program extraction data generated based on presentation program data downloaded from a server, in a program extraction data storage; and
extracting a program to be viewed from the recorded program storage by a program extractor based on the program extraction data, and outputting the program to a display, when displayable program identification data included in the program extraction data is displayed on a display, and selected by an operation signal.

6. The program presentation method of claim 5, **characterized by** further comprising:
comparing program identification data included in the presentation program data downloaded from the server, with program identification data stored in the recorded program storage, and when they are identical, determining the program identification data to be the program extraction data, for generating the program extraction data.

7. The program presentation method of claim 6, **characterized in that** the program extraction data includes a category and/or rating displayable with program identification data, and a program corresponding to the category and/or rating is extracted as the program to be viewed, when the displayed category and/or rating is selected and determined by an operation signal.
